Europäisches Patentamt

**European Patent Office**

**Office européen des brevets**

(19)

(11) Publication number: **0 294 413 B1**

# EUROPEAN PATENT SPECIFICATION

(12)

(45) Date of publication of patent specification: **10.11.93**  (51) Int. Cl.⁵: **H01Q 3/22**, H01Q 3/40,
H01Q 25/00, H04B 7/185

(21) Application number: **88900057.6**

(22) Date of filing: **23.11.87**

(86) International application number:
**PCT/US87/03100**

(87) International publication number:
**WO 88/04837 (30.06.88 88/14)**

(54) **STEERABLE BEAM ANTENNA SYSTEM USING BUTLER MATRIX.**

(30) Priority: **22.12.86 US 944091**

(43) Date of publication of application:
**14.12.88 Bulletin 88/50**

(45) Publication of the grant of the patent:
**10.11.93 Bulletin 93/45**

(84) Designated Contracting States:
**DE FR GB IT**

(56) References cited:
**US-A- 3 710 281**
**US-A- 4 122 453**
**US-A- 4 228 401**

**Journal of Spacecraft and Rockets, volume 17,no.1, January/February 1980, (New York, US), D.O. Reudink et al.: " Rapid-scan area-coverage communication satellite" pages 9-14 see page 11,section "Beam-forming networks" with figures 3.A.4**

(73) Proprietor: **Hughes Aircraft Company**
**7200 Hughes Terrace**
**P.O. Box 45066**
**Los Angeles, California 90045-0066(US)**

(72) Inventor: **RENSHAW, Kenneth, H.**
**1817 Agnes Road**
**Manhattan Beach, CA 90266(US)**
Inventor: **MURPHY, Timothy, A.**
**2723 Vanderbilt 20**
**Redondo Beach, CA 90278(US)**

(74) Representative: **Witte, Alexander, Dr.-Ing.**
**Witte, Weller, Gahlert & Otten**
**Patentanwälte**
**Augustenstrasse 14**
**D-70178 Stuttgart (DE)**

Conference Proceedings of the 16th European Microwave Conference,8-12 September 1986, F. Rispoli et al.:" High performance beam forming network formulti contoured beam antennas", pages 369-374 see pages 369-370,section "Introduction" with figures 1-3

1981 International Symposium,Digest Antennas and Propagation",volume2,1981,IEEE, (Los Angeles,US),J.D. Hanfling et al.:"Transform feed for low sidelobe space-fed lens phased array antennas",pages 461-464 see page 461 with figure 1

National Telecommunications Conference,NTC-1980,30 November-4 December,Conference Record,volume 1 of 4, IEEE, (Houston, Texas,US),P.R. Hirschler-Marchand et al.:"System design and technology development for an EHF beam hopped satellite downlink",pages 17.5.1-17.5.7 see page 17.5.1-17.5.2 with figures 1-5

**Description**

This invention relates to an antenna with frequency steerable beam, in particular for satellites to communicate with ground stations and, more particularly, to an antenna system for satellites incorporating an antenna array and a Butler matrix for producing a communicating beam steerable by varying a carrier frequency of the beam.

Satellites are now employed for providing communication, such as telephone in land mobile service, between distant points on the surface of the earth. One embodiment of such a system is of considerable interest, namely, an embodiment wherein the satellite travels in a geostationary orbit about the earth. For example, the satellite may be located at a fixed position above the United States. The satellite would carry an antenna having a sufficient beam width in the north-south direction and in the east-west direction to permit the reception and transmission of communication signals between any two points in the United States. The beam width in the north-south direction can be enlarged to include both United States and Canada, if desired. A beam width of approximately 4.5° in the north-south direction is sufficient to cover both Canada and the United States. The beam width in the east-west direction should be approximately 8° to provide the desired coverage. A problem arises in that the use of an antenna having the foregoing beam width in the north-south and east-west directions has less signal gain than is desired. This necessitates larger power amplifiers for driving radiating elements of the antenna.

In previous satellite communication systems, such a wide beam width antenna has employed at least two overlapping beams to provide the coverage. The generation of such beams with a desired overlap until very recently required the use of separate large reflectors each having a diameter of about 4,8768m (16 feet). In the construction of communication satellites, however, it is desirable to reduce physical sizes, weights, and power requirements to facilitate the construction and launching of such satellites.

In commonly assigned U.S. Patent US 4,972,151 filed October 1, 1985 in the name of H.A. Rosen and entitled STEERED-BEAM SATELLITE COMMUNICATION SYSTEM, which is hereby incorporated by reference, there is disclosed a system for communicating via satellite between ground stations. The system comprises a set of ground stations spaced apart along an arc of the earth's surface and a satellite positioned above the earth in view of the arc. An array of radiating elements is deployed on the satellite, and a frequency responsive beam former connected to the radiating elements is provided for forming a beam of electromagnetic radiation. The beam is steerable in response to a carrier frequency of the radiation to intercept individual ones of the stations in seriatim. The frequencies of an up-link carrier and of a down-link carrier respectively associated with respective ones of the ground stations vary monotonically with position along the arc to permit automatic positioning of a beam from the satellite to a ground stations upon energization of a carrier frequency assigned to the ground station.

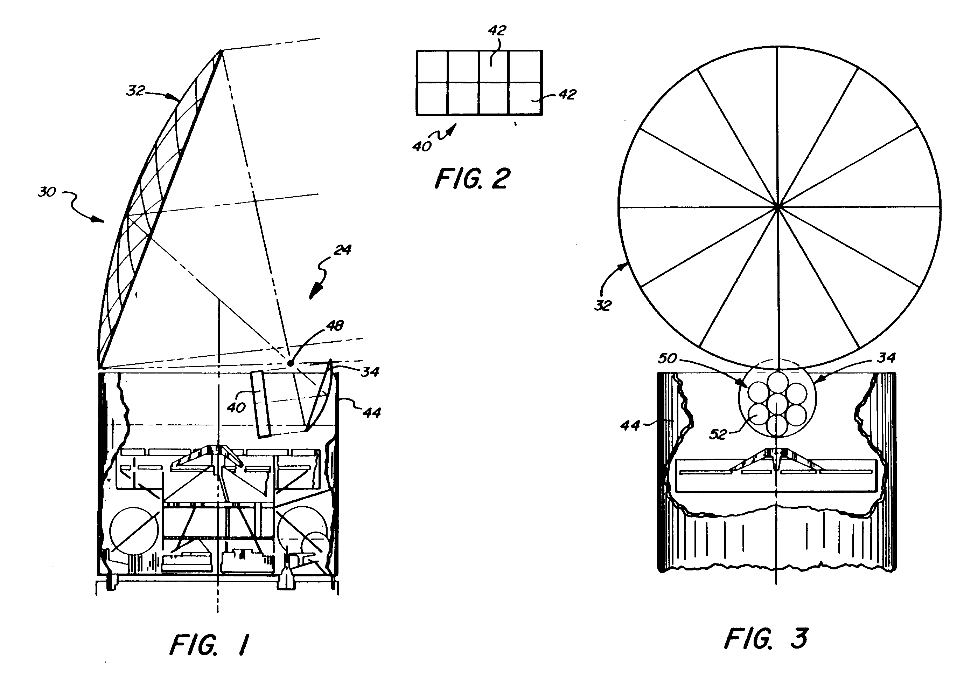

So that the present invention may be better understood, the satellite communication system disclosed and claimed in the aforementioned application will now be discussed in some detail by reference to Figs. 1 through 5. As shown in Figs. 1 and 2, the satellite 24 employs a simplified antenna structure 30 comprised of two confocal parabolic reflectors, one of which is a large main reflector 32 and one of which is a small subreflector 34, and a 4 x 2 array 40 of eight radiating elements 42, all of which are supported by a frame 44. A front view of the array 40 is shown in Fig. 2. The array 40 of radiators 42 is rigidly secured in front of the subreflector 34, and with the subreflector is located within the satellite 24. The main reflector 32 is substantially larger than the subreflector 34, and due to the larger size, is folded during launch, and is subsequently unfurled when the satellite or spacecraft 24 has been placed in orbit. Upon being unfurled it extends outside of the satellite 24 as shown. Also shown in Fig. 1 within the frame 44 is other spacecraft equipment such as rocket engines and fuel tanks, thereby to demonstrate that the antenna system 30 can be easily carried by the satellite 24.

The arrangement of the components of the antenna system 30 provides a significant reduction in weight and complexity for a satellite antenna over that which has been employed before. This is accomplished by fabricating the main reflector 32 and the subreflector 34 with parabolic reflecting surfaces, the two surfaces being oriented as a set of confocal parabolas having a common focal plane or point 48. Such configuration of reflecting surfaces in an antenna is described in C. Dragone and M. Cans, "Imaging Reflector Arrangements to Form a Scanning Beam Using a Small Array", Bell System Technical Journal, Vol. 58, No. 2, (Feb. 1979), pp. 501-515. The configuration provides a magnification of the effective aperture of an array of radiating elements. In the preferred configurations as shown in Figs. 1 and 2, the magnification factor is 4.7. The eight radiating elements 42 of the array 40 represent a substantial reduction in complexity of the antenna since, if a direct radiator of similar sized elements had been employed, a total of 155 radiating elements would have been needed to give the same antenna performance. As shown in Fig. 3, a hexagonally arranged antenna array 50 of seven primary radiators 52 may be used if desired in place of the 4 x 2 array of radiators mentioned above. The array 50 of feed elements 52 may be employed for both up-link and down-link communications.

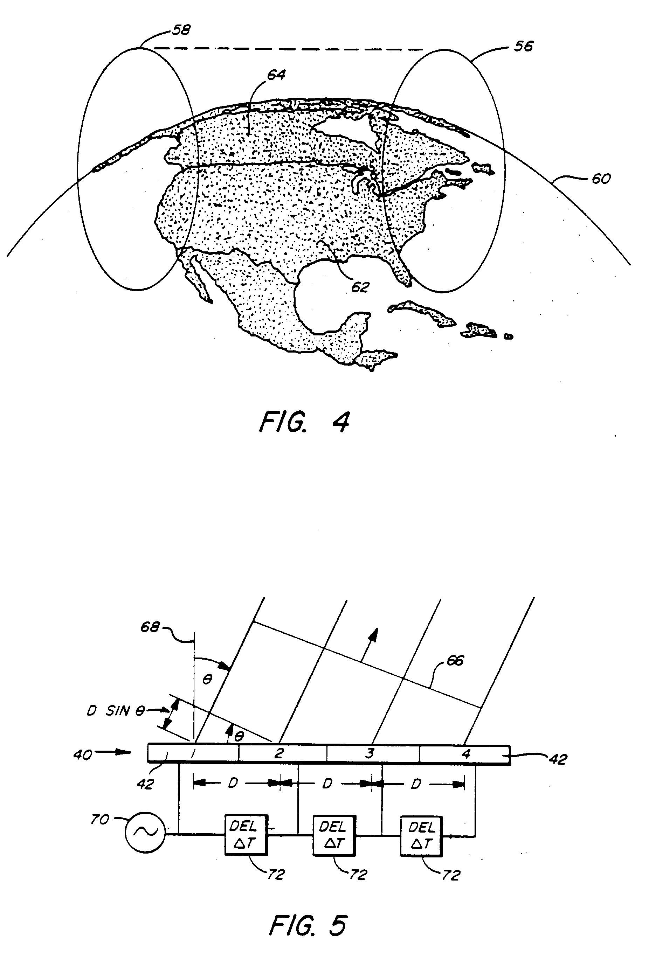

Fig. 4 illustrates two exemplary spot beams 56, 58 produced by the satellite 24 (not shown in Fig. 4) in geosynchronous orbit above the earth 60. Spot beam 56 extends substantially along the eastern coast of the United States 62 and Canada 64, while spot beam 58 extends substantially along the western coast of the United States 62 and Canada 64. The satellite transmits and receives information-carrying radiation to and from ground stations located within regions of the earth's surface encompassed by the respective first and second spot beams 56, 58. The coverage patterns of the respective spot beams 56, 58 preferably are selected such that frequency bands available for communications are concentrated in regions of the surface of the earth 60 where the largest communications capacity is necessary, to optimize antenna gain usage by substantially limiting the amount of antenna gain which is incident upon regions wherein relatively little communications capacity is necessary, such as in sparsely populated regions.

The antenna system of satellite 24 provides a one-dimensional beam scan (which may be considered to be a continue of virtual spot beams) across the surface of the earth 60. Such a scan can be directed along an arc of the earth's surface such as a longitude or a latitude, or an arc included relative to a latitude. The scanning can be accomplished most efficiently for the geography depicted in Fig. 4 by scanning in the east-west direction providing a scan path which follows an arc of a great circle of the earth. The scanning is preferably implemented by using fixed delays (as will be described hereinafter) among radiating elements of the antenna system and by employing different frequencies for different geographical locations on the surface of the earth. Thereby, the scanning is accomplished by variation of the frequency of the radiation for each position of the beam scan (i.e., for each virtual beam), and in addition, a plurality (not shown) of the beams can be generated simultaneously by the provision of different frequencies of electromagnetic radiation in each of the beams. By use of this virtual beam technique, users at any point within the coverage of the beam scan are close to the center of one of the virtual beams. Therefore, users will typically receive 2 or 3 dB more power than they would from a comparable satellite using fixed beams.

To minimize the required electromagnetic power and provide for simplicity of antenna structure, the preferred antenna system provides beams with a generally circular cross section and a width of 4.5°, by use of the hexagonal array 50 of radiating elements 52 as shown in Fig. 3. The elements 52 preferably are cup dipole feed horns one wavelength in diameter.

As an example of its use, the satellite communications system may be designated for land mobile telephone service, sometimes referred to as the Mobile Satellite (MSAT) system. Two frequency bands are assigned for such service: 866-870 MHz for the down-link band and 821-825 MHz for the up-link band. The 4 MHz width of each of these bands may be subdivided into approximately 1000 frequency slots which are individually assignable to individual ground stations on the surface of the earth 60 for companded single sideband voice communication. If the stations were uniformly positioned from east to west, with each station being at a different longitude, approximately twelve assignable channels comprising an up-link and a down-link would be available within a scan angle of approximately 0.1 degree.

Since the channels would be uniformly spaced apart in frequency, a beam would be uniformly stepped in the east-west direction as the down-link (or up-link) frequency was shifted from one channel to the next channel. In other words, the operating frequency of the ground station is preferably selected to match the frequency of a beam directed from the satellite to the ground station. For a uniform distribution of the stations in the east-west direction, the beam could be centered with respect to the east-west component thereof, upon each of the stations. However, as a practical matter, the stations tend to be clustered in various geographic areas of the United States 62 and Canada 64 providing a nonuniform distribution of the stations along the east-west scanning path of the beam. Consequently, a peak signal amplitude cannot be obtained for all of the stations.

By way of example, assuming that 25 ground stations are located within a scan angle of 0.1°, the corresponding reduction from peak signal amplitude is less than 0.01 dB (decibels). This represents a significant improvement over previously available satellite communication systems employing separate fixed beams wherein the average loss in signal gain relative to peak signal gain in the east-west direction was approximately 0.8 dB. As noted above, such previous satellite communication systems employed antenna systems having a plurality of large antenna reflectors, measuring approximately 4,8768m (16 feet) in diameter, while the antenna system described in the aforementioned patent application requires only one such large reflector and a much smaller confocal subreflector as will be described hereinafter. Thus, the disclosed system provides for improved uniformity of signal gain with a simplified mechanical structure of the antenna system.

Fig. 5 presents a diagram useful in explaining the frequency scanning operation of the antenna system. A set of four radiating elements 42 are arranged side by side along a straight line, and face an outgoing wavefront 66 of electromagnetic radiation. The angle of incidence of the wavefront or beam scan angle is measured relative to a normal 68 to the array 40 of elements 42. A frequency scan is generated in a planar array antenna by introduction of a progressive time delay into the array. The progressive time delay provides for a difference in the phases of signals excited by adjacent ones of the elements 42 such that the phase difference is proportional to the frequency of the radiated signals. This explanation of the operation assumes an outgoing wavefront, it being understood that the operation of the array of elements 42 is reciprocal so that the explanation applies equally well to an incoming wavefront. The relationship of scan angle to frequency, element spacing, and time delay is given by the following equations:

$$\frac{2\pi D}{\lambda} \sin \theta = \Delta\Psi = 2\pi f \Delta T \qquad (1)$$

therefore,

$$\sin \theta = \frac{\lambda}{D} f \Delta T \qquad (2)$$

wherein:
D = spacing between elements,
$\theta$ = beam scan angle,
$\lambda$ = wavelength of radiation,
$\Delta\Psi$ = phase increment between adjacent elements,
f = frequency relative to band center, and
$\Delta T$ = time delay increment between adjacent elements.

The radiating elements 42 are energized via a source 70 of microwave energy and a series of delay units 72 coupled to the source 70. Each of the delay units 72 provides the time delay increment referred to above in Equations (1) and (2). The source 70 is connected directly to an element 42 at the left side of the array while the next element 42 is connected by one of the delay units 72 to the source 70. The signals applied by the source 70 to the third and the fourth of the elements 42 are delayed, respectively, by two and three delay increments of the delay units 72. This provides the linear phase relationship to provide the scan angle for the outgoing wavefront 66. The phase increment between two adjacent ones of the radiators 42 is proportional to the product of the frequency of the radiation and the delay increment. When this product is equal to 360°, the wavefront propagates in a direction normal to the array of elements 42. Increasing values of frequency produce greater phase shift to direct the wavefront to the right of the normal 68 as shown in Fig. 5, while decreasing amounts of frequency produce less phase shift and drive the wavefront to the left of the normal. Accordingly, the wavefront can be scanned symmetrically about the array of elements 42.

The aforementioned patent also discloses that for the case of the foregoing up-link and down-link frequency bands, and for the case of the radiating elements 42 having a diameter of approximately one wavelength, a suitable value of differential delay, as provided by the delay units 72 of Fig. 5 is 185 nanoseconds for the case of substantially uniform distribution of ground stations on the surface of the earth 60. To provide the east-west coverage of 8°, the up-link and the down-link beams are scanned through an arc from -4° to +4°. In view of the magnification factor of 4.7, the scan angle of the array 40 of radiating elements 42 must be enlarged by the same magnifying factor, 4.7, from that of the output scan from the main reflector 32. Therefore, the beam produced by the radiating elements 42 must be scanned through an arc of 18.8° to either side of a normal to the array 40. The foregoing value of differential delay, namely, 185 nanoseconds, provides the 18.8° scan to either side of the normal to the array 40. In the ideal situation of uniformly distributed ground stations between the East Coast and the West Coast of the United States and Canada, the number of channels per degree has a constant value of 1000/8 = 125.

In the situation wherein the differential delays provided by the delay units 72 are independent of frequency, then an optimal direction of the scanned beam is obtained for the ideal situation of uniform distribution of ground stations. In the more likely situation of a nonuniform distribution of ground stations, the scanned beam may be displaced slightly from its designated ground station. As has been noted above, such a beam-pointing inaccuracy reduces the signal level by less than 0.01 decibels for a beam-pointing error of 0.1 degree.

The aforementioned patent discloses that the scanning can be adapted to accommodate the foregoing nonuniformity in ground-station distribution by introducing a frequency responsive component to the differential delay. It gives an example of nonuniform distribution where the differential delay between columns of the array 40 of radiating elements 42 (see Fig. 4) should vary, at least for the forming of the down-link beams, between 262 nanoseconds at the low frequency end of the transmission band to 131 nanoseconds in the high frequency end of the transmission band. Other values of delay may be employed in the beam forming operation of up-link beams provided by the receiver of the antenna system (30).

The values of delay used in the different frequency bands, namely, the up-link and down-link frequency bands, are inversely proportional to the center frequencies of these bands as is apparent from Equations (1) and (2). A reduction in the differential delay results in a reduced amount of phase shift between successive beams with a corresponding reduction in displacement of beam position on the surface of the earth 60 from one channel to the next channel. Thereby, the beam can be more accurately positioned in a region of high density of ground stations. In a corresponding fashion, an increase in the differential delay results in increased movement of the beam as the frequency is shifted from one channel to the next channel, thus accommodating positions of the beam to a less dense distribution of ground stations. The channel number corresponds to a specific frequency in either the up-link or the down-link band. With respect to the positioning of ground stations along an arc of a great circle of the earth 60, as disclosed with reference to Fig. 4, it is seen that the frequencies selected for the various stations vary monotonically with position along the foregoing arc.

In view of the foregoing description, it is seen that the above described communication system provides two-way communications between ground stations and a geosynchronous satellite. The assignment of specific frequencies to respective ones of the ground stations, in combination with frequency scanning of both up-link and down-link beams of the satellite (24), permits a simplification in the circuitry of the system. In addition, the use of the two confocal parabolic reflectors provides a multiplicative factor which reduces the number of elements required in the array of radiating elements. The use of a scanned beam also reduces the physical size of the antenna system by reducing the number of reflectors, resulting in a lighter weight, more efficient satellite communications system.

It has been found that certain technical impediments exist to the commercial implementation of the above described confocal reflector system. Due to spacecraft size limitations the subreflector 34 cannot be constructed large enough (in terms of wavelengths) to perform with acceptable efficiency. These size limitations also restrict the size of the main reflector and the focal lengths that may be used in the confocal arrangement.

It would be desirable, in order to achieve a further weight-saving and simplification of the aforementioned satellite communications system, to eliminate the subreflector altogether while still utilizing a relatively low number of radiating elements. It would also be very advantageous to be able to combine the power of output signals from several individual amplifiers operated in parallel into an individual one or small group of the radiating elements so as to produce a stronger spot beam in any given location along the area of the earth being swept by the scanning beam. It would further be desirable to use as many elements as possible as common elements in an antenna system for the transmitter antenna system and receiver antenna system of a communications satellite so as to save weight, space and cost. The present invention is directed to achieving these and other desirable objects.

The present invention provides an antenna system with frequency steerable beam as defined in the appended claim 1 and a method of operating a frequency steerable beam antenna system as defined in the appended claim 16.

United States patent US 4,122,453 already discloses an antenna system with a reflector, an antenna array with a plurality of feed elements, a Butler matrix performing a discrete Fourier transform and phase shifters. Thus, these features are already known from US 4,112,453.

The antenna disclosed in the prior art document is a mechanically rotatable radar antenna. A computer generates phase shift signals such that the emitted beam has an intensity which is an approximation of a cosecant square function of the angle of elevation. The prior art antenna systems has two operating modes: In a first (tracking) mode, a single radiator is excited. In a search mode, all of the radiators are operated.

US 4,122,453 does not provide a frequency-steerable beam, as the present invention does. It will further be appreciated that in the embodiment of the prior art antenna, as it is a ground-based antenna, there are no problems of weight saving (in particular, related to a subreflector) and the like, as is the case in a satellite-based antenna.

The following explanations relate to preferred embodiments of the present invention.

The spatial transformation which is performed is preferably selected from the group of transformations consisting of Fourier transforms and inverse Fourier transforms. The antenna array and the Butler matrix are preferably used for both transmission and reception of signals. When the antenna system is used for reception, the input signals provided to the Butler matrix are signals obtained from electromagnetic radiation focused by the reflector onto the antenna array for reception by the feed elements, and the spatial transformation is an inverse Fourier transform. When the system is used for transmission, the Butler matrix produces signals provided to the antenna array, and the spatial transformation is a Fourier transform.

The antenna systems of the present invention are preferably used in a satellite for communications with ground stations. In such an application, the system typically is further comprised of a satellite frame to which the reflector and antenna array are attached. The reflector and antenna array should be arranged with respect to one another to enable a steerable beam produced by electromagnetic radiation emanating from said array to be reflected off the reflector when the latter is in its operating position.

Another aspect of the present invention is a method of operating a frequency steerable beam antenna system, comprising the steps of:

- Providing a set of first signals having the following predetermined phase relationship with respect to one another:

$$x_n(t) = \sin(\omega t + n\psi) \qquad n = 0,1,2,3$$

wherein n identifies the relative position of each first signal within the set of first signals, and $\psi$ is the input phase value, said set of first signals containing information to be transmitted, and wherein the input phase value varies as a function of frequency;

- providing a Butler matrix for generating a set of second signals from said set of first signals by performing basically a spatial transformation on the amplitude and phase distribution of said set of first signals; and

- transmitting said set of second signals toward a reflector by passing said second signals through a plurality of radiating elements located basically at one focal point of the reflector.

Preferably, the spatial transformation is a Fourier transform.

The method is preferably used in satellite communications systems for communicating with multiple ground stations through the use of the steerable beam associated with the antenna system. In such applications the reflector is a main reflector and is mounted on the satellite.

These and other aspects, objects, features and advantages of the present invention will be more fully understood from the following detailed description and appended claims, taken in conjunction with the drawings.

In the accompanying drawings:

Fig. 1 is a side elevational view of a communications satellite, showing an array of radiators, an imaging reflector and primary reflector;

Fig. 2 is a front view of the rectangular array of radiators in the Fig. 1 satellite;

Fig. 3 is a front elevational view of the antenna sub-systems shown in Fig 1, which employs an alternative hexagonal arrangement of radiators;

Fig. 4 is a stylized pictorial view of spot beams formed on the surface of the earth using the Fig. 1 satellite;

Fig. 5 is a diagram showing a relationship between an outgoing wavefront and the elements of a line array of radiators;

Fig. 6 is a simplified diagrammatic representation of an antenna system of the present invention usable in a satellite;

Fig. 7 is an optical diagram showing a dual lens system;

Fig. 8 is simplified electrical diagram of a four port Butler matrix usable in an antenna system of the present invention;

Fig. 9 is a plot, as a function of input phase, of the amplitude of the output signal of port A of the Fig. 8 Butler matrix when ports A', B', C' and D' are fed with a specified set of input signals;

Fig. 10 is a plot, as a function of input phase, of typical amplitudes of all of the output ports in the Fig. 8 Butler matrix when the matrix is fed with a specified set of input signals;

Fig. 11 is a simplified electrical block diagram showing a set of diplexers and a Butler matrix used in common by transmitter and receiver networks in an antenna system of the present invention;

Fig. 12 is an electrical diagram of one embodiment of a receive network of the present invention which introduces port-to-port phase differences into a received set of signals through the use of progressive time delays or frequency dependent phase shifts;

Fig. 13 is an electrical block diagram of one embodiment of a transmit network of the present invention having functional similarities to the receive network shown in Fig. 12; and

Fig. 14 is an electrical block diagram of a dual frequency dual signal transmit network of the present invention for simultaneously summing and preparing for transmission a plurality of distinct frequency signals.

The present invention comprises a novel antenna system for communicating with multiple ground stations typically distributed over a large geographical area of the earth. The following description is presented in conjunction with the technical description set forth above, to enable any person skilled in the art to make and use the invention, and is provided in the context of a particular application and its requirements. Various modifications to the preferred embodiments will be readily apparent to those skilled in the art, and the generic principles defined herein may be applied to other embodiments and applications without departing from the spirit and scope of the invention. Thus, the present invention is not intended to be limited to the embodiments shown, but is to be accorded the widest scope consistent with the principles and features disclosed herein.

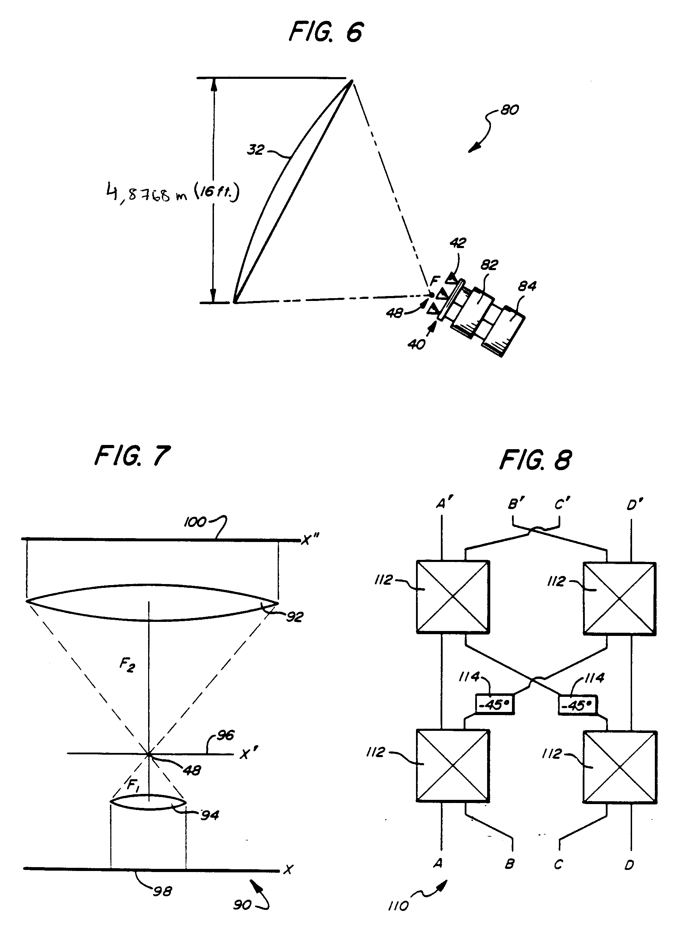

As shown in Fig. 6, the antenna system 80 of the present invention includes a main reflector 32 and an array 40 (or 50) of radiators 42 (or 52) of the type described in Figs. 1 through 5 above. The antenna system 80 is preferably located on satellite 24 by being mounted on a suitable frame 44. In the antenna system 80 of the present invention, the subreflector 34 (shown in Figs. 1 and 3) is removed and the array 40 (or 50) of primary radiators 42 (or 52) or feed horns is placed at (or near) the focal point or plane 48 of the offset feed reflector 32. The array 40 (or 50) is fed by a Butler matrix 82, which is arranged "backwards" with respect to the traditional use of this type of beam forming matrix. Connected to the matrix 82 are the transmitter and receiver networks, represented by block 84. The use of a Butler matrix in this manner produces an excitation sequence for the antenna system 80 which is the spatial Fourier transform of the excitation sequence input to the beam forming array of primary radiators in the antenna system 30 of Figs. 1 through 5. In this way, the far field pattern produced by the array and signal reflector is identical (in the ideal case) to that of the previously described confocal arrangement. There will be some difference in the non-ideal case due to the effects of spatial sampling and the physical limitations on the size of the array that may be placed at the focal point.

The operation of the antenna system 80 shown in Fig. 6 and the foregoing explanation of same may be better understood by considering the equivalent optical model of the conformal reflector configurations, shown in Figs. 1 and 3 previously described above. Fig. 7 shows the equivalent optical model 90 of this earlier antenna system 30 employing two lenses 92 and 94, which correspond in function to the main reflector 32 and the subreflector 34 respectively. The focal plane x' represented by line 96 includes the focal point 48. The focal length of lens 92 is $F_2$, while the focal length of lens 94 is $F_1$. The magnification factor M of the system 90 in Fig. 7 is given by:

$$M = F_2/F_1 \qquad (3).$$

An amplitude and phase distribution of an image, F(x), at the image plane x represented by line 98 is magnified by lenses 92 and 94 such that at the magnified image plane x'' represented by line 100

$$f(x'') = f(M x) \qquad (4).$$

From optical theory, it is well known that the amplitude and phase distribution at the focal plane x' is the spatial Fourier transform of the amplitude and phase distribution at the image plane x. That is to say:

$$f(x') = F[f(x)] \qquad (5).$$

By removing the first lens and producing f(x') directly at the focal plane x', the same amplitude and phase distribution will result at the magnified image plane x''. The antenna system 80 of the present invention is based upon this idea.

Returning to Fig. 6, it may be seen that the Butler matrix 82 in the system 80 performs the spatial Fourier transform of the excitation sequence generated by the transmitter in block 84. It may also be seen that the Butler matrix 82 performs the spatial inverse Fourier transform, $F^{-1}[f(x'')]$, of the far field beam reflected off reflector 32 and focused onto the antenna array 40 (or 50) for reception by the feed elements 42 (or 52), and subsequent processing by the receiver in block 84.

Fig. 8 illustrates a four port Butler matrix 110, which has a set of four inputs and a set of four outputs. The Butler matrix 110 includes four 90° phase lead hybrids 112 and two negative 45° phase shifters 114 interconnected to one another and to the two sets of four ports as shown. The four port matrix 110 is considered here for simplicity, but as those in the art know, Butler matrices can be designed with any number of desired ports. In this regard, much work has been done in developing design technique for Butler matrices, see, e.g., M. Ueno, "A Systematic Design Formulation for Butler Matrix Applied FFT Algorithm," IEEE Trans. Antennas and Propagation, Vol. AP- 29, pp. No. 3, May 1981. In the traditional use of this matrix, ports A, B, C and D would be the input ports and ports A', B', C' and D' would be the output ports and would be attached to radiator elements in an antenna system which does not use a reflector. When the antenna system 80 of the present invention is used to transmit, ports A', B', C' and D' are used as the input ports, and ports A, B, C, and D are used as the output ports. In the system 80 used as a transmitter, the ports A', B', C' and D' are fed with a set of signals that have some predetermined phase relationship from port to port that is a function of frequency. If the same signals were fed to a planar antenna array, different spot beams, each with a different beam direction, would be formed for the different frequencies. We sometimes refer to these spot beams as virtual beams, since in theory a continuum of beams exist over the entire beam width defined by the lowest frequency to highest frequency spot beams. The different phase distributions resulting from different frequencies are combined in the matrix 110 and constructively or destructively combine on different output ports. The effect is the creation of a virtual phase center in the array of signals at output ports A, B, C and D for each frequency. In other words, the phase center of an antenna array 40 (or 50) having a plurality of radiator elements 42 (or 52) with one such element attached to ports A, B, C and D will scan as a function of frequency. A particular frequency may result in a signal at one and only one port, or it may result in signals at two or more ports whose amplitude and phase correspond to a spatial phase center somewhere between the ports.

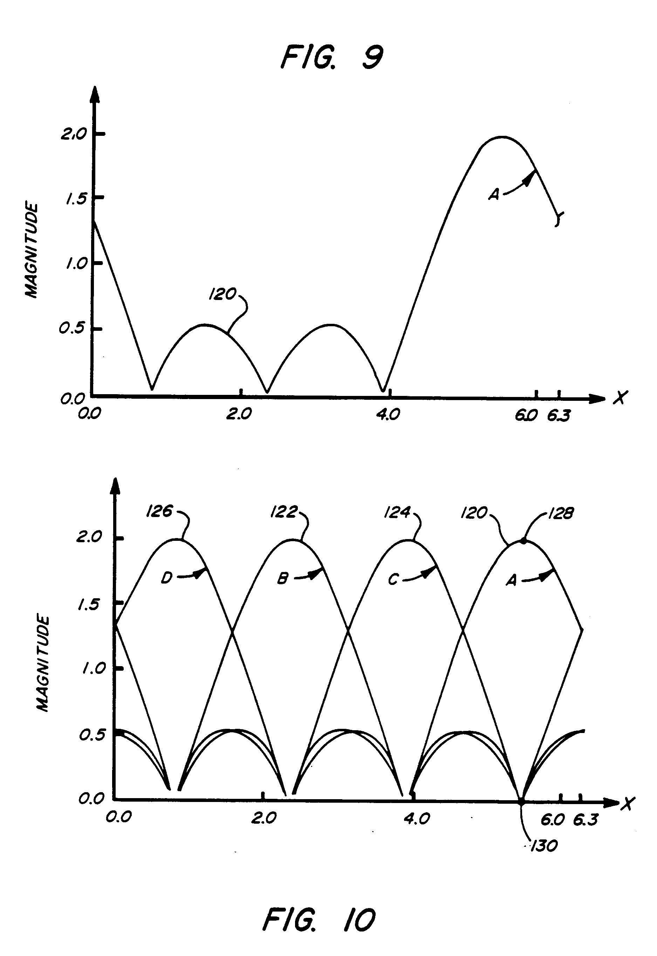

Curve 120 of Fig. 9 shows the amplitude response of port A in Fig. 8 when input ports A', B', C' and D' of matrix 110 are fed with a set of input signals defined by:

$$X_n (t) = \sin (\omega t + n \Psi) \qquad n = 0, 1, 2, 3 \qquad (6)$$

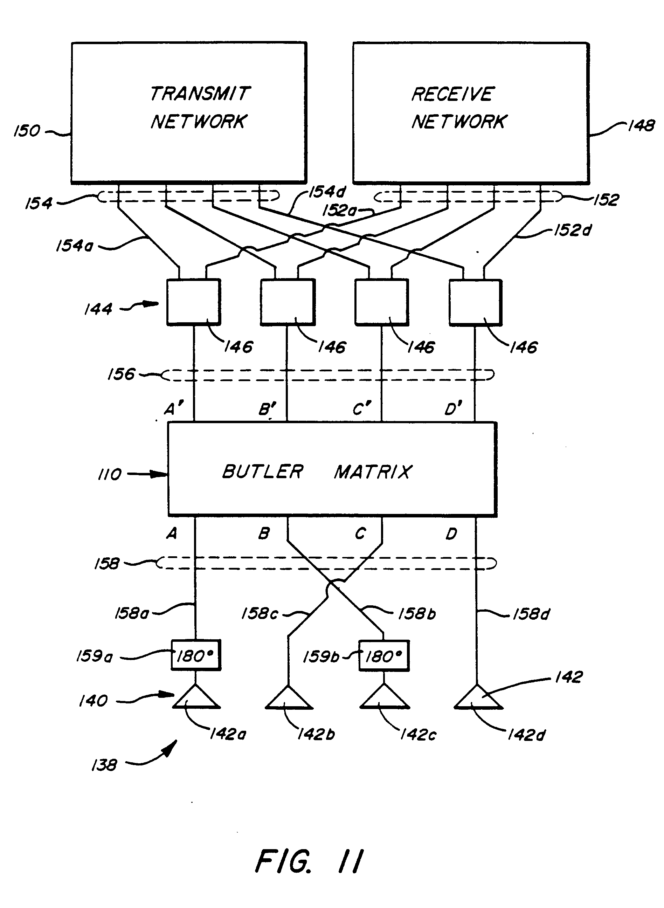

where $\Psi$ is varied from 0 to 2 pi. (In the usual frequency scanned technique the input phase value $\Psi$ is some function of frequency and is not necessarily constant). Port A' corresponds to $n = 0$, port B' to $n = 1$ and so forth. Note that at a particular phase distribution a maximum signal level occurs at port A. Figure 10 shows the magnitudes of the output signals on all ports when the matrix 110 is fed with the same type of signal sequence described above. Curves 122, 124 and 126 are the output signals of ports B, C and D, respectively. Note that each port has a maximum output value for a different relative input phase value $\Psi$. Note also that of a maximum amplitude for a particular port, the outputs of the other ports are zero. For example, when curve 120 associated with port A is of its maximum at point 128, curves 122-126 are at zero amplitude at point 130. Further analysis shows that the phase center of antenna array attached to the output of the Butler matrix (as illustrated in Fig. 11) will scan the length of the array 40 (or 50) as a function of $\Psi$ . Different frequencies result in different phase centers of the antenna array.

The performance of an antenna system employing a Butler matrix is affected by the number of elements used. The more elements used the better the spatial sampling of the input and output signal sequences. Thus, it will be appreciated that a Butler matrix with relatively few ports performs a rough approximation of a Fourier transform (or inverse Fourier transform) on signals passing therethrough. As the number of ports increases, the quality and accuracy of the transformation performed increases.

Fig. 11 illustrates in greater detail how the Butler matrix 110 may be used in an antenna system 138 of the present invention, which includes transmitter and receiver subsystems. The system 138 includes an array 140 of feed elements or horns 142, which are used both as radiating elements and receiving elements. The horns 142 may be of any conventional or suitable design, such as a cup dipole one wavelength in diameter. In practice, the horns 142 function in the same basic manner as the radiating elements 42 (or 52) described earlier, and are located at or very near the focal plane or plane of an offset feed reflector 32, as in the Fig. 6 arrangement.

The system 138 also includes a group 144 of diplexers 146, and a receive network 148 and a transmit network 150 which are respectively connected to the diplexers 146 by groups 152 and 154 of electromagnetic conduits or conductors. These components may all be of conventional or suitable design. For the diplexers 164, however, we prefer to use diplexers of the type fully described in commonly assigned U.S. Patent No. 4,427,953 to T. Hudspeth and H. Keeling entitled MICROWAVE DIPLEXER. The diplexers 146 serve to properly route incoming signals in the up-link frequency band (received by the antenna array 140, transformed by the matrix 110, and impressed upon conductors of conductor group 156) to the receive network 148. Similarly, the diplexers 146 serve to route the set of signals in the down-link frequency band (generated by the transmit network 150, impressed upon conductor group 154) to the Butler matrix 110, where they are transformed and impressed on conductor group 158 for delivery to the antenna array 140. Note that in Fig. 11 the output of ports B and C of the Butler matrix 110 are reversed in order to obtain a continuous scan of the virtual phase center with frequency. This is accomplished by having port B connected by conduit 158b to feed horn 142c, and having port C connected via conduit 158c to feed horn 142b as shown. The need to reverse the outputs of the beam ports B and C is clear when one observes that in Fig. 10 the curves 122 and 124 representing for the output signals of ports B and C are reversed with respect to the ordering of the output signals of ports A and D, from high to low values of input phase $\Psi$. The two 180° phase shifters 159a and 159b correct for phase reversals in the output signals of ports A and B, which occur on account of the operation of the Butler matrix 110.

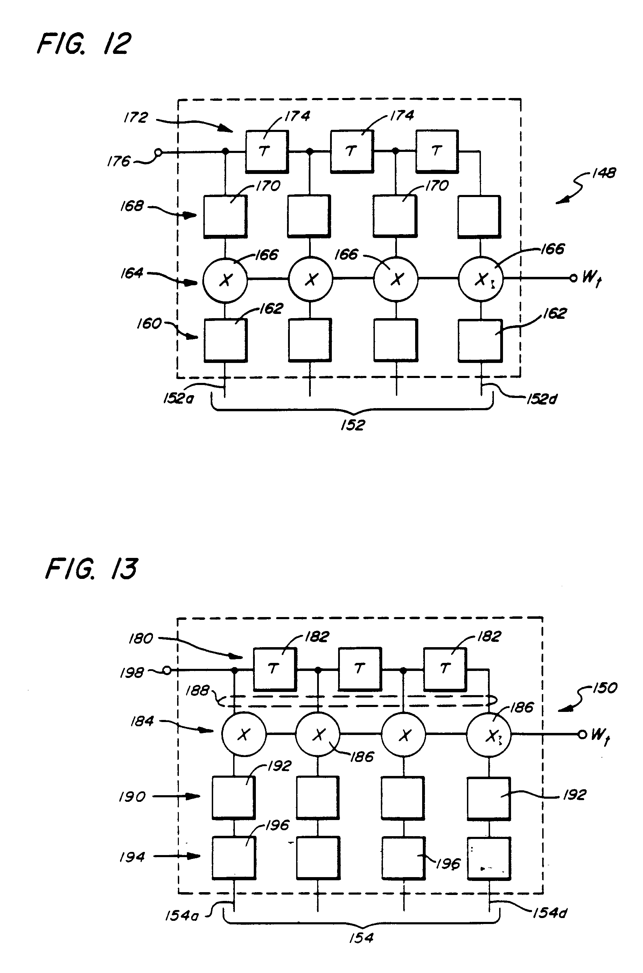

Fig. 12 is a block diagram for one possible embodiment for, which shows the various components and signal paths the receive network 148 of antenna system 138 in Fig. 11. The network 148 includes: a group 160 of preamplifiers 162 for boosting the level of the received signals delivered by conduits 152; a group 164 of frequency translators 166 for reducing the carrier frequency of received signals from preamplifiers 162 to a intermediate or baseband frequency range; a group 168 of four bandpass filters 170 for rejecting side lobes or other frequency translation products outside of the desired frequency range; and a group 172 of three shift-producing components or elements 174, all connected together as shown to produce a baseband signal on output terminal or port 176. The shift producing elements 174 may either be time delay elements or frequency dependent phase shifters. The receiver network 148 is tuned to the frequency bands of the respective up-link communication channels, thereby permitting simultaneous reception of signals from a plurality of ground stations.

Fig. 13 is a block diagram of the transmit network 150 shown in Fig. 11. The network 150 includes: a group 180 of shift-producing components or elements 182; a group 184 of four frequency shifters 186 for increasing the carrier frequency of signals imposed on group of conduits 188 to a higher frequency range, a group 190 of band pass filters 192 for removing unwanted signals outside of the desired frequency range generated by the operation frequency translators 186; and a group 194 of power amplifiers 196 to boost the power of the signals impressed on conductor group 154. In the transmit network 150, the signal to be transmitted is imposed upon input terminal or port 198.

Figs. 12 and 13 also illustrate one possible method for producing the port-to-port input phase value $\Psi$ as a function of frequency through the introduction of time delays or frequency dependent phase shifts. These are introduced through the shift-producing elements 174 in Fig. 12, and the shift-producing elements 182 in Fig. 13. In Fig. 13, the time delays or phase shifts are introduced at baseband (or some intermediate frequency), and then each signal in the resultant signal set is imposed on a conduit of conduit group 188 in order to be frequency translated in parallel by frequency translators 186 up to the desired frequency range. This is done so that a particular bandwidth will produce the desired range of phase distributions in the signal set applied to the Butler matrix 110 through conductor group 154, and therefore result in the scanning of the phase center of the array across to the desired range. This method can be advantageously applied, for example, in the MSAT system discussed in the background portion of the specification.

The MSAT system satellite discussed above will transmit in the UHF band at 866 to 870 MHz. The change in phase of a sinusoid due to a time delay such as those in Figs. 12 and 13 can be calculated by the following formula where input phase value is expressed in radians:

$$\Delta\Psi = n2\pi f\,\tau \qquad (7).$$

In order to produce a sufficiently large beam scan angle when using the Butler matrix 110 shown in Fig. 8, a fairly wide range of phase distributions is required.

One approach for determining what time delays or phase shifts are required to operate the system 138 of Fig. 11 in the desired manner is to choose the optimum range of phase distributions and find a frequency at which the bandwidth in question will produce this range using a time delay or phase shifting device. For example the Butler matrix 110 shown in Fig. 8 will provide the best scanning of the phase center of the antenna array if the input phase distributions range between $\pi/4$ and $7\pi/4$ radians. For simplicity assume a time delay will be used. Hence setting the conditions

$$\pi/4 = 2\pi f_1\,\tau \qquad (8)$$

and

$$7\pi/4 = 2\pi f_2\,\tau \qquad (9)$$

then

$$\tau = 7\ \pi/8\ \pi f_2 = \pi/8\ \pi f_1 \qquad (10)$$

or

$$f_2/f_1 = 7 \qquad (11)$$

Combining this relationship with the idea that

$$f_2 - f_1 = 4\ \text{MHz} \qquad (12)$$

i.e., the bandwidth of down-link transmissions in the MSAT satellite, we can find that $f_1 = 666.7 \times 10^3$ Hz and $f_2 = 4.6667 \times 10^6$ Hz. Working at this intermediate frequency range we can now find a time delay that will produce the desired range of phase distributions, namely $\tau = 1/(8f_1) = 187.5 \times 10^{-9}$ seconds.

Working with this time delay at this intermediate frequency band allows the bandwidth of the signal to produce the desired port to port frequency dependent phase relationships. Each signal in the set can then be frequency translated up to the desired frequency range (in parallel) without changing the port to port phase relationship introduced by the time delays at the intermediate frequency band.

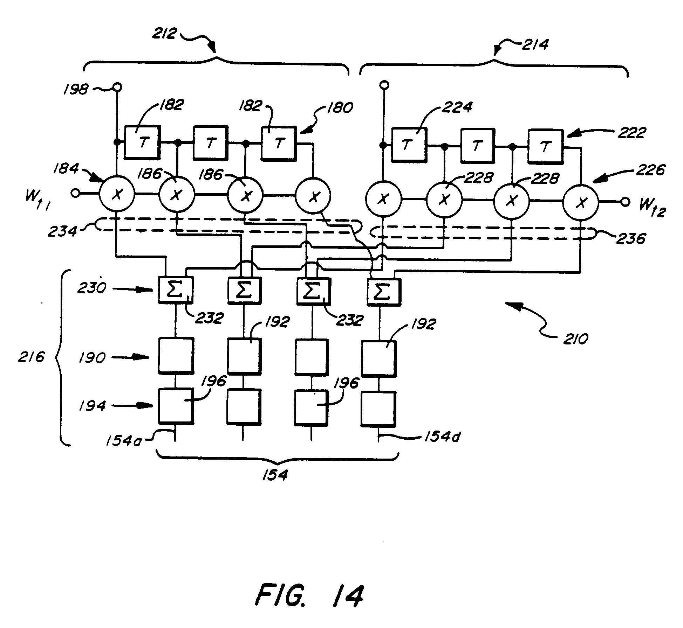

By using different time delays and different intermediate frequencies the signals from different transmitters (or to different receivers) may be combined to use the same Butler matrix and produce the same type of antenna patterns even if the transmitters are operating at different frequencies and have different bandwidths. Using the technique described above, different signals with different bandwidths may be used to produce a set of input signals with the same range of phase distributions. Applying the combination of these sets to the Butler matrix feeding an antenna array allows both signal bandwidths to produce the same frequency scanned virtual beam patterns. This concept is illustrated in Fig. 14, which shows a dual frequency transmit network 210 capable of generating two sets of output signals at different frequency bands. The network 210 may be used in place of transmit network 150 in the antenna system 138 shown in Fig. 11.

The network 210 includes a first frequency network portion 212, a second frequency network portion 214, and a common network portion 216. Network portion 212 is comprised of a group 180 of three shift-producing devices 182 and a group 184 of frequency translators 186, which operate as previously explained in Fig. 13. Network portion 214 includes a group 222 of shift-producing devices 224 and a group 226 of frequency translating devices 228 for producing a set of signals at a different frequency band from those produced by network portion 212. The shift-producing devices 182 and 224 may be time delay units or frequency dependent phase shift units. Network portion 216 includes: a group 230 of sum-producing elements or mixers 232 (which combine the two different sets of signals from network portions 212 and 214 delivered to the mixers 232 via conductor groups 234 and 236, respectively); a group 190 of band pass filters 192; and a group 194 of power amplifiers 196. The various components of network 210 are connected as shown in Fig. 14 and result in the production of two sets of signals having different frequency bands which are combined, amplified and then simultaneously impressed upon conductor group 154 for delivery to the remainder of the system 138 shown in Fig. 11.

The shift-producing units or devices 174, 182 and 224 may be conveniently fabricated of lumped parameter all-pass networks employing well-known circuitry. These units or devices are located ahead of the transmitting power amplifiers 184 and 196 in Figs. 13 and 14 so as to operate at relatively low power and thereby minimize power loss.

The foregoing embodiments of the present invention have been described with respect to a mobile satellite communication systems for transmitting and receiving between multiple ground stations at certain specified frequencies in the L band. Those in the art will appreciate that the present invention may be readily adapted to be used in land or satellite communication systems operated in other frequency bands, such as the C or Ku bands, for example. The size of the main reflector, the arrangement and type of antenna arrays, and the specific receive and transmit networks utilized in the present invention may vary substantially without departing from the fair scope of the broader aspects of the present invention. For example, separate feed horns may be used to transmit and receive electromagnetic radiation consituting the steerable beam. Also, a conventional screen-type diplexer may be placed between the antenna array and reflector so as to divert the incoming electromagnetic radiation to be received to a separate receiver array arranged at a substantial angle to the plane of first antenna array. Such an embodiment would thus have separate transmit and receive antenna arrays. Alternatively, two separate main reflectors could be provided, one to be used with a separate transmit antenna array, and the other to be used with a separate receive antenna array. We presently do not favor this latter arrangement for satellite antenna systems of the present invention, on account of the appreciable extra weight and cost of providing two main reflectors. However, such an embodiment may be quite suitable for systems of the present invention constructed on land or on sea-going vessels.

In view of the foregoing description, it is seen that the antenna system of the present invention is well-suited for two-way communications between ground stations and a geosynchronous satellite. The antenna system of the present invention has the advantages of effectively combining the power of the output signals of a plurality of power amplifiers simultaneously operated in parallel. It also provides a single reflector antenna system which, through the use of a spatial transformation means such as a Butler martrix, is functionally equivalent to the dual confocal reflector system described in the background portion of the specification, including achieving a magnification of the effective aperture of the elements. The antenna system of the present invention eliminates the need for the use of a subreflector without providing aditional radiating elements, thus saving weight, space and cost, since the antenna system of the present invention uses a scannable virtual beam technique, it also reduces the physical size of the antenna system by minimizing the number of radiating elements and reflectors which must be used. Thus, an antenna system of the present invention results in a lighter weight, more efficient satellite communication systems. Finally, the use of time delays or phase shifts at baseband or intermediate frequencies allows the output of multiple transmit networks to be applied to a single array of radiating elements to produce the same antenna pattern at different frequencies, thus enabling the antenna system to be used in satellite communication systems requiring a multiple, two-way, simultaneous communication channels between many widely separated ground stations within the scanning angle of the virtual beams.

**Claims**

1. Antenna system (80; 138) with frequency steerable beam comprising:

    (1.1) a reflector (32) having at least one focal point (48) associated therewith,

    (1.2) an antenna array (40;140) having a plurality of feed elements (42;142),

    (1.3) said feed elements (42;142) of said antenna array (40;140) being substantially disposed at the focal point (48) of said reflector (32) in the operating position thereof,

    (1.4) a Butler matrix (82;110) performing a spatial transformation on the amplitude and phase distribution of input signals provided thereto and

    (1.4.1) having a plurality of input ports (A',B', C',D') and output ports (A,B,C,D),

    (1.4.2) the output ports (A,B,C,D) of said Butler matrix (82;110) being connected to said feed elements (42;142) of said antenna array (40;140),

    (1.5) shift-producing elements (72;174,182;224) providing a set of signals with a predetermined phase relationship according to the following formula:

$$X_n(t) = \sin(\omega t + n\psi) \qquad n = 0,1,2,3$$

    wherein n identifies the relative position of each signal within said set of signals, where $\omega/2$ pi is the carrier frequency or an intermediate frequency of said set of signals and where $\psi$ is an input phase value in the range from 0 to 2 pi, said set of signals feeding the input ports (A',B',C',D') of said Butler matrix (82;110), and wherein the input phase value varies as a function of the frequency $\omega/2$ pi.

2. Antenna system (80;138) according to claim 1, characterized in that each shift-producing element (72;174,182;224) is a time delay device.

3. Antenna system (80;138) according to claim 1 or 2, characterized in that said Butler matrix (82;110) provides Fourier transforms and inverse Fourier transforms, respectively.

4. Antenna system (80;138) according to any of the preceding claims, characterized in that each of said feed elements (42;142) are feed horns.

5. Antenna system (80;138) according to any of the preceding claims, characterized in that said feed elements (42;142) are arranged in a hexagonal pattern.

6. Antenna system (80;138) according to any of the preceding claims, characterized by a satellite frame (44) to which said reflector (32) and antenna array (40; 140) are attached.

7. Antenna system (80;138) according to any of the preceding claims, characterized by first signal generating means (150;212) which comprise said shift-producing elements (182;224) for generating, from a first signal having a first nominal frequency, a first set of second signals shifted in phase from one another.

8. Antenna system (80;138) according to claim 7, characterized in that said first signal generating means (150;212) includes a plurality of frequency translation means (186;228) for modulating the set of second signals at a predetermined frequency before said second signals are delivered to said Butler matrix (82;110).

9. Antenna system (80; 138) according to claim 7 or 8, characterized in that
(9.1) said first signal generating means (150;212) includes a plurality of signal paths, with one such path being associated with each signal generated thereby, and wherein
(9.2) each such signal path includes an amplifier (196).

10. Antenna system (80;138) according to claim 9, characterized in that
(10.1) each such signal path also includes a bandpass filter (192) arranged in series with said amplifier (196).

11. Antenna system (80;138) according to claim 10, characterized in that
(11.1) each shift-producing element (182;224) is connected to one of said signal paths formed at least in part by one such band pass filter (192) and one such amplifier (196) arranged in series between said shift-producing element (182;224) and one of the input ports (A',B',C',D') of said Butler matrix (82;110).

12. Antenna system (80;138) according to at least one of claims 7 to 11, characterized by second signal generating means (214) for generating, from a third signal having a second nominal frequency different from said first nominal frequency, a second set of second signals for delivery to said Butler matrix (82;110) in order to transmit, as part of a frequency scanning virtual beam, information encoded in said third signal.

13. Antenna system (80;138) according to claim 12, characterized by summing means for summing said first and second sets of second signals before said signals are delivered to said Butler matrix (82;110).

14. Antenna system (80;138) according to claim 13, characterized in that said summing means includes a plurality of sum-producing elements (232), and said first signal generating means (212) and said second signal generating means (214) each include and share a plurality of band pass filters (192) and modulating amplifiers (196), and characterized in that each sum-producing element (232) is connected to a signal path formed at least in part by one such band pass filter (192) and one such modulating amplifier (196) arranged in series between said sum-producing element (232) and one of the input ports (A',B',C',D') of said Butler matrix (82;110).

15. Antenna system (80; 138) according to at least one of claims 12 to 14, characterized in that said first signal generating means (212) and said second signal generating means (214) each include a plurality of frequency translation means (186,228) for modulating the set of second signals associated therewith at a predetermined frequency before said second signals are delivered to respective ones of said sum-producing elements (232).

16. Method of operating a frequency steerable beam antenna system (80;138), comprising the steps of:
(16.1) Providing a set of first signals having the following predetermined phase relationship with respect to one another:

$$X_n(t) = \sin(\omega t + n\psi) \quad n = 0,1,2,3$$

wherein n identifies the relative position of each first signal within the set of first signals where $\omega/2$ pi is the carrier frequency or an intermediate frequeny of said set of signals, and $\psi$ is the input phase value in the range from 0 to 2 pi, said set of first signals containing information to be transmitted, and wherein the input phase value varies as a function of said frequency $\omega/2$ pi;

(16.2) providing a Butler matrix (82;110) for generating a set of second signals from said set of first signals by performing a spatial transformation on the amplitude and phase distribution of said set of first signals, said Butler matrix (82;110) having a plurality of input ports (A',B',C',D') and output ports (A,B,C,D); and

(16.3) transmitting said set of second signals toward a reflector (32) by passing said second signals through a plurality of feed elements (42; 142) located substantially at one focal point of the reflector (32) in the operating position thereof.

17. Method according to claim 16, characterized in that said reflector (32) is mounted on a satellite (24) and is a main reflector.

18. Method according to claim 16 or 17, characterized in that said spatial transformation is a Fourier transform.

19. Method according to any of claims 16 to 18, characterized in that step (16.1) includes the substeps of:
(19.1) Providing a baseband signal; and
(19.2) introducing a plurality of time delays into said baseband signals to generate at least a plurality of said first signals.

20. Method according to any of claims 16 to 18, characterized in that step (16.1) includes the substeps of:
(20.1) Providing a baseband signal; and
(20.2) applying said baseband signal to a plurality of frequency dependent phase shifters to generate at least a plurality of said first signals.

21. Method according to any of claims 16 to 20, characterized by the step of
(21.1) frequency translating the set of first signals to a first higher frequency range in parallel before generating said set of second signals.

22. Method according to any of claims 16 to 21, characterized by the further steps of
(22.1) providing a set of third signals having the following predetermined phase relationship with respect to one another:

$$x_n(t) \; = \; \sin \, (\omega t \; + \; n\psi) \qquad n \; = \; 0,1,2,3$$

wherein n identifies the relative position of each third signal within the set of third signals, and $\psi$ is the input phase value,
(22.2) providing a Butler matrix (82;110) for generating a set of fourth signals from said set of third signals by performing basically a spatial transformation on the amplitude and phase distribution of said set of third signals;
(22.3) transmitting said set of fourth signals toward said reflector (32) by passing said fourth signals through the same plurality of radiating elements (42;142) the second signals are passed through; and
(22.4) frequency translating the set of third signals to a second higher frequency range in parallel before generating said set of fourth signals, said second frequency range being different from said first frequency range.

23. Method according to claim 22, characterized in that said Butler matrix (82;110) in said antenna system (80;138) is common to said first and third signals respectively for generating simultaneously said sets of second and fourth signals from said sets of first and third signals respectively.

**Patentansprüche**

1. Antennensystem (80; 138) mit einer frequenzgesteuerten Strahlungskeule, mit:
(1.1) einem Reflektor (32), der wenigstens einen ihm zugeordneten Brennpunkt (48) aufweist,
(1.2) einem Antennenarray (40; 140), das eine Vielzahl von Speiseelementen (42; 142) aufweist,
(1.3.) wobei die Speiseelemente (42; 142) des Antennenarrays (40; 140) im wesentlichen in dem Brennpunkt (48) des in seiner Betriebsstellung befindlichen Reflektors (32) angeordnet sind,

14

(1.4) einer Butler-Matrix (80; 110), welche eine räumliche Transformation auf die Amplituden- und Phasenverteilung von ihr zugeführten Eingangssignalen durchführt und

(1.4.1) eine Vielzahl von Eingangsanschlüssen (A', B', C', D') sowie Ausgangsanschlüssen (A, B, C, D) aufweist,

(1.4.2) wobei die Ausgangsanschlüsse (A, B, C, D) der Butler-Matrix (82; 110) an die Speiseelemente (42; 142) des Antennenarrays (40; 140) angeschlossen sind,

(1.5) Verschiebungen bewirkenden Elementen (72; 174, 182; 224), welche einen Satz von Signalen mit einer vorbestimmten Phasenbeziehung gemäß der folgenden Formel bereitstellen:

$$x_n (t) = \sin (\omega t + n\psi), \qquad n = 0,1,2,3,$$

in der n die relative Position eines jeden Signales innerhalb des Satzes von Signalen angibt, wobei $\omega/2$ pi die Trägerfrequenz oder eine Zwischenfrequenz des Satzes von Signalen ist und wobei $\psi$ ein Eingangsphasenwert in dem Bereich von 0 bis 2 pi ist, wobei der Satz von Signalen die Eingangsanschlüsse (A', B', C', D') der Butler-Matrix (82; 110) speist, und bei dem der Eingangsphasenwert als Funktion der Frequenz $\omega/2$ pi variiert.

2. Antennensystem (80; 138) nach Anspruch 1, dadurch gekennzeichnet, daß jedes Verschiebungen bewirkende Element (72; 172, 182; 224) ein Laufzeitglied ist.

3. Antennensystem (80; 138) nach Anspruch 1 oder 2, dadurch gekennzeichnet, daß die Butler-Matrix (82; 110) Fourier-Transformationen bzw. inverse Fourier-Transformationen liefert.

4. Antennensystem (80; 138) nach einem der vorhergehenden Ansprüche, dadurch gekennzeichnet, daß jedes der Speiseelemente (42; 142) ein Speisehorn ist.

5. Antennensystem (80; 138) nach einem der vorhergehenden Ansprüche, dadurch gekennzeichnet, daß die Speiseelemente (42; 142) in einem hexagonalen Muster angeordnet sind.

6. Antennensystem (80; 138) nach einem der vorhergehenden Ansprüche, gekennzeichnet durch einen Satellitenrahmen (44), an dem der Reflektor (32) und das Antennenarray (40; 142) angebracht sind.

7. Antennensystem (80; 138) nach einem der vorhergehenden Ansprüche, gekennzeichnet durch erste signalerzeugende Mittel (150; 212), welche die Verschiebungen bewirkenden Elemente (182; 224) umfassen, um aus einem ersten Signal mit einer ersten nominalen Frequenz einen ersten Satz von zweiten Signalen zu erzeugen, welche in der Phase zueinander verschoben sind.

8. Antennensystem (80; 138) nach Anspruch 7, dadurch gekennzeichnet, daß die ersten signalerzeugenden Mittel (150; 212) eine Vielzahl von frequenzumsetzenden Mitteln (186; 228) umfassen, um den Satz von zweiten Signalen bei einer vorbestimmten Frequenz zu modulieren bevor die zweiten Signale an die Butler-Matrix (82; 110) geliefert werden.

9. Antennensystem (80; 138) nach Anspruch 7 oder 8, dadurch gekennzeichnet, daß

(9.1) die ersten signalerzeugenden Mittel (150; 212) eine erste Vielzahl von Signalpfaden umfassen, wobei ein solcher Pfad einem jeden davon erzeugten Signal zugeordnet ist, und wobei

(9.2) ein jeder solcher Signalpfad einen Verstärker (196) umfaßt.

10. Antennensystem (80; 138) nach Anspruch 9, dadurch gekennzeichnet, daß

(10.1) ein jeder derartiger Signalpfad ebenfalls ein Bandpaßfilter (192) umfaßt, das in Serie mit dem Verstärker (196) angeordnet ist.

11. Antennensystem (80; 138) nach Anspruch 10, dadurch gekennzeichnet, daß

(11.1) jedes Verschiebungen bewirkende Element (182; 224) an einen der Signalpfade angeschlossen ist, der zumindest teilweise von einem derartigen Bandpaßfilter (192) und einem derartigen Verstärker (196) gebildet ist, die in Serie zwischen dem Verschiebungen bewirkenden Element (182; 224) und einem der Eingangsanschlüsse (A', B', C', D') der Butler-Matrix (82; 110) angeordnet sind.

**12.** Antennensystem (80; 138) nach zumindest einem der Ansprüche 7 bis 11, gekennzeichnet durch zweite signalerzeugende Mittel (214), um von einem dritten Signal mit einer zweiten von der ersten nominalen Frequenz verschiedenen nominalen Frequenz einen zweiten Satz von zweiten Signalen zur Lieferung an die Butler-Matrix (82; 110) zu erzeugen, um als Teil einer frequenzabtastenden, virtuellen Strahlungskeule in dem dritten Signal codierte Information zu übertragen.

**13.** Antennensystem (80; 138) nach Anspruch 12, gekennzeichnet durch Summationsmittel, um den ersten und zweiten Satz von zweiten Signalen zu summieren bevor die Signale an die Butler-Matrix (82; 110) geliefert werden.

**14.** Antennensystem (80: 138) nach Anspruch 13, dadurch gekennzeichnet, daß die Summationsmittel eine Vielzahl von summenerzeugenden Elementen (232) umfassen, und daß die ersten signalerzeugenden Mittel (212) und die zweiten signalerzeugenden Mittel (214) jeweils eine Vielzahl von Bandpaßfiltern (192) sowie modulierenden Verstärkern (196) umfassen und miteinander teilen, und dadurch gekennzeichnet, daß jedes summenerzeugende Element (232) mit einem Signalpfad verbunden ist, der zumindest teilweise durch ein derartiges Bandpaßfilter (192) und einen derartigen modulierenden Verstärker (196) gebildet ist, die in Serie zwischen das summenerzeugende Element (232) und einen der Eingangsanschlüsse (A', B', C', D') der Butler-Matrix (82; 110) angeordnet sind.

**15.** Antennensystem (80; 138) nach wenigstens einem der Ansprüche 12 bis 14, dadurch gekennzeichnet, daß die ersten signalerzeugenden Mittel (212) und die zweiten signalerzeugenden Mittel (214) jeweils eine Vielzahl von frequenzumsetzenden Mitteln (186, 228) umfassen, um den diesen zugeordneten Satz von zweiten Signalen bei einer vorbestimmten Frequenz zu modulieren bevor die zweiten Signale zu Entsprechenden der summenerzeugenden Elemente (232) geliefert werden.

**16.** Verfahren zum Betreiben eines Antennensystems (80; 138) mit frequenzgesteuerter Strahlungskeule, mit den Schritten:

(16.1) Bereitstellen von einem Satz von ersten Signalen, welche bezogen zueinander die folgende vorbestimmte Phasenbestimmung aufweisen:

$$x_n (t) = \sin (\omega t + n\psi), \qquad n = 0,1,2,3,$$

in der n die relative Position eines jeden ersten Signales innerhalb des Satzes von ersten Signalen definiert, wobei $\omega/2$ pi die Trägerfrequenz oder eine Zwischenfrequenz des Satzes von Signalen ist und wobei $\Psi$ der Eingangsphasenwert in dem Bereich von 0 bis 2 pi ist, wobei der Satz von ersten Signalen zu übertragende Information enthält, und wobei der Eingangsphasenwert als Funktion der Frequenz $\omega/2$ pi variiert;

(16.2) Bereitstellen von einer Butler-Matrix (82; 110), um aus dem ersten Satz von Signalen durch Durchführen einer räumlichen Transformation auf der Amplituden- und Phasenverteilung des Satzes von ersten Signalen einen Satz von zweiten Signalen zu erzeugen, wobei die Butler-Matrix (82; 110) eine Vielzahl von Eingangsanschlüssen (A', B', C', D') und Ausgangsanschlüssen (A, B, C, D) aufweist; und

(16.3) Übertragen des Satzes von zweiten Signalen zu einem Reflektor (32), indem die zweiten Signale durch eine Vielzahl von Speiseelementen (42; 142) geleitet werden, die im wesentlichen an einem Brennpunkt des Reflektors (32) in dessen Betriebsstellung angeordnet sind.

**17.** Verfahren nach Anspruch 16, dadurch gekennzeichnet, daß der Reflektor (32) auf einem Satelliten (24) montiert und ein Hauptreflektor ist.

**18.** Verfahren nach Anspruch 16 oder 17, dadurch gekennzeichnet, daß die räumliche Transformation eine Fourier-Transformation ist.

**19.** Verfahren nach einem der Ansprüche 16 bis 18, dadurch gekennzeichnet, daß der Schritt (16.1) die Unterschritte aufweist:

(19.1) Bereitstellen eines Basisbandsignales; und
(19.2) Einfügen von einer Vielzahl von Zeitverzögerungen in die Basisbandsignale, um wenigstens eine Vielzahl der ersten Signale zu erzeugen.

**20.** Verfahren nach einem der Ansprüche 16 bis 18, dadurch gekennzeichnet, daß der Schritt (16.1) die Unterschritte aufweist:

(20.1) Bereitstellen eines Basisbandsignales; und

(20.2) Zuführen des Basisbandsignales zu einer Vielzahl von frequenzabhängigen Phasenschiebern, um wenigstens eine Vielzahl der ersten Signale zu erzeugen.

**21.** Verfahren nach einem der Ansprüche 16 bis 20, gekennzeichnet durch den Schritt

(21.1) paralleles Umsetzen des Satzes von ersten Signalen in der Frequenz auf einen ersten höheren Frequenzbereich bevor der Satz von zweiten Signalen erzeugt wird.

**22.** Verfahren nach einem der Ansprüche 16 bis 21, gekennzeichnet durch die weiteren Schritte

(22.1) Bereitstellen eines Satzes von dritten Signalen, welche die folgende Phasenbeziehung zueinander aufweisen:

$$x_n (t) = \sin (\omega t + n\psi), \qquad n = 0,1,2,3,$$

in der n die relative Position eines jeden dritten Signales innerhalb des Satzes von dritten Signalen angibt, und wobei $\Psi$ der Eingangsphasenwert ist,

(22.2) Bereitstellen von einer Butler-Matrix (82; 110), um aus dem Satz von dritten Signalen durch Durchführen von im wesentlichen einer räumlichen Transformation auf der Ampliituden- und Phasenverteilung des Satzes von dritten Signalen einen Satz von vierten Signalen zu erzeugen;

(22.3) Übertragen des Satzes von vierten Signalen zu dem Reflektor (32), indem die vierten Signale durch dieselbe Vielzahl von Primärstrahlern (42; 142) geleitet werden, durch welche die zweiten Signale geleitet werden; und

(22.4) paralleles Umsetzen des Satzes von dritten Signalen in der Frequenz auf einen zweiten höheren Frequenzbereich bevor der Satz von vierten Signalen erzeugt wird, wobei der zweite Frequenzbereich von dem ersten Frequenzbereich verschieden ist.

**23.** Verfahren nach Anspruch 22, dadurch gekennzeichnet, daß die Butler-Matrix (82; 110) in dem Antennensystem (80; 138) für die ersten bzw. dritten Signalen gemeinsam vorgesehen ist, um gleichzeitig die Sätze von zweiten und vierten Signalen aus den Sätzen von ersten bzw. dritten Signalen zu generieren.

**Revendications**

**1.** Système d'antenne (80; 138) avec un faisceau pouvant être pointé au moyen de la fréquence, comprenant :

(1.1) un réflecteur (32) auquel est associé au moins un foyer (48);

(1.2) un réseau d'antenne (40; 140) ayant un ensemble d'éléments d'alimentation (42; 142),

(1.3) les éléments d'alimentation (42; 142) du réseau d'antenne (40; 140) étant pratiquement disposés au foyer (48) du réflecteur (32) dans la position de fonctionnement de celui-ci;

(1.4) une matrice de Butler (82; 110) effectuant une transformation spatiale sur la distribution d'amplitude et de phase de signaux d'entrée qui lui sont appliqués, et

(1.4.1) ayant un ensemble d'accès d'entrée (A', B', C', D') et d'accès de sortie (A, B, C, D),

(1.4.2) les accès de sortie (A, B, C, D) de la matrice de Butler (82; 110) étant connectés aux éléments d'alimentation (42; 142) du réseau d'antenne (40; 140),

(1.5) des éléments de génération de déphasage (72; 174, 182; 224) produisant un ensemble de signaux ayant une relation de phase prédéterminée, conforme à la relation suivante :

$$X_n(t) = \sin (\omega t + n\psi) \qquad n = 0, 1, 2, 3$$

dans laquelle n identifie la position relative de chaque signal dans l'ensemble de signaux, $\omega/2$ pi est la fréquence porteuse ou une fréquence intermédiaire de l'ensemble de signaux, et $\psi$ est une valeur de phase d'entrée dans la plage de 0 à 2 pi, cet ensemble de signaux alimentant les accès d'entrée (A', B', C', D') de la matrice de Butler (82; 110), et dans laquelle la valeur de phase d'entrée varie en fonction de la fréquence $\omega/2$ pi.

**2.** Système d'antenne (80; 138) selon la revendication 1, caractérisé en ce que chaque élément de génération de déphasage (72; 174, 182; 224) est un dispositif de retard.

**3.** Système d'antenne (80; 138) selon la revendication 1 ou 2, caractérisé en ce que la matrice de Butler (82; 110) accomplit respectivement des transformations de Fourier et des transformations de Fourier inverses.

**4.** Système d'antenne (80; 138) selon l'une quelconque des revendications précédentes, caractérisé en ce que chacun des éléments d'alimentation (42; 142) est un cornet d'alimentation.

**5.** Système d'antenne (80; 138) selon l'une quelconque des revendications précédentes, caractérisé en ce que les éléments d'alimentation (42; 142) sont disposés en une configuration hexagonale.

**6.** Système d'antenne (80; 138) selon l'une quelconque des revendications précédentes, caractérisé par un châssis de satellite (44) sur lequel le réflecteur (32) et le réseau d'antenne (40; 140) sont fixés.

**7.** Système d'antenne (80; 138) selon l'une quelconque des revendications précédentes, caractérisé par des premiers moyens de génération de signaux (150; 212) qui comprennent des éléments de génération de déphasage (182; 224) pour générer, à partir d'un premier signal ayant une première fréquence nominale, un premier ensemble de seconds signaux qui sont mutuellement déphasés.

**8.** Système d'antenne (80; 138) selon la revendication 7, caractérisé en ce que les premiers moyens de génération de signaux (150; 212) comprennent un ensemble de moyens de transposition de fréquence (186; 228) qui sont destinés à moduler l'ensemble de seconds signaux à une fréquence prédéterminée avant que les seconds signaux ne soient appliqués à la matrice de Butler (82; 110).

**9.** Système d'antenne (80; 138) selon la revendication 7 ou 8, caractérisé en ce que
(9.1) les premiers moyens de génération de signaux (150; 212) comprennent un ensemble de voies de signal, avec l'une de ces voies associée à chaque signal qui est généré par les moyens précités, et dans lequel
(9.2) chaque voie de signal comprend un amplificateur (196).

**10.** Système d'antenne (80; 138) selon la revendication 9, caractérisé en ce que
(10.1) chaque voie de signal contient également un filtre passe-bande (192) qui est disposé en série avec l'amplificateur (196).

**11.** Système d'antenne (80; 138) selon la revendication 10, caractérisé en ce que
(11.1) chaque élément de génération de déphasage (182; 224) est connecté à l'une des voies de signal qui sont formées au moins en partie par un tel filtre passe-bande (192) et un tel amplificateur (96), disposés en série entre l'élément de génération de déphasage (182; 224) et l'un des accès d'entrée (A' , B' , C', D') de la matrice de Butler (82; 110).

**12.** Système d'antenne (80, 138) selon l'une au moins des revendications 7 à 11, caractérisé par des seconds moyens de génération de signaux (214) qui sont destinés à générer, à partir d'un troisième signal ayant une seconde fréquence nominale différente de la première fréquence nominale, un second ensemble de seconds signaux, pour l'application à la matrice de Butler (82; 110), dans le but d'émettre, dans le cadre d'un faisceau virtuel effectuant un balayage sous la dépendance de la fréquence, une information qui est codée dans le troisième signal.

**13.** Système d'antenne (80; 138) selon la revendication 12, caractérisé par des moyens de sommation qui sont destinés à faire la somme des premier et second ensembles de seconds signaux, avant que ces signaux ne soient appliqués à la matrice de Butler (82; 110).

**14.** Système d'antenne (80; 138) selon la revendication 13, caractérisé en ce que les moyens de sommation comprennent un ensemble d'éléments de génération de somme (232), et les premiers moyens de génération de signaux (212) et les seconds moyens de génération de signaux (214) comprennent respectivement et se partagent un ensemble de filtres passe-bande (192) et d'amplificateurs modulateurs (196), et caractérisé en ce que chaque élément de génération de somme (232) est connecté à une voie de signal qui est formée au moins en partie par un tel filtre passebande (192) et un tel amplificateur modulateur (196), connectés en série entre l'élément de génération de somme (232) et l'un des accès d'entrée (A' , B' , C', D') de la matrice de Butler (82; 110).

15. Système d'antenne (80; 138) selon l'une au moins des revendications 12 à 14, caractérisé en ce que les premiers moyens de génération de signaux (212) et les seconds moyens de génération de signaux (214) comprennent chacun un ensemble de moyens de transposition de fréquence (186, 228) pour moduler à une fréquence prédéterminée l'ensemble de seconds signaux qui leur sont associés, avant que les seconds signaux ne soient appliqués à des éléments respectifs parmi les éléments de génération de somme (232).

16. Procédé pour faire fonctionner un système d'antenne dont le faisceau peut être pointé au moyen de la fréquence (80; 138), comprenant les étapes suivantes :

(16.1) on produit un ensemble de premiers signaux ayant entre eux la relation de phase prédéterminée suivante :

$$X_n(t) = \sin (\omega t + n \psi) \qquad n = 0, 1, 2, 3$$

dans laquelle n désigne la position relative de chaque premier signal dans l'ensemble de premiers signaux, $\omega/2$ pi est la fréquence porteuse ou une fréquence intermédiaire de cet ensemble de signaux, et $\psi$ est la valeur de phase d'entrée dans la plage de 0 à 2 pi, l'ensemble de premiers signaux contenant une information à émettre, et dans laquelle la valeur de phase d'entrée varie en fonction de la fréquence $\omega/2$ pi;

(16.2) on fournit une matrice de Butler (82; 110) pour générer un ensemble de seconds signaux à partir de l'ensemble de premiers signaux, en effectuant une transformation spatiale sur la distribution d'amplitude et de phase de l'ensemble de premiers signaux, cette matrice de Butler (82; 110) ayant un ensemble d'accès d'entrée (A' , B' , C' , D') et d'accès de sortie (A, B, C, D); et

(16.3) on émet l'ensemble de seconds signaux vers un réflecteur (32), en faisant passer les seconds signaux à travers un ensemble d'éléments d'alimentation (42; 142) qui se trouvent pratiquement à un foyer du réflecteur (32) dans la position de fonctionnement de ce dernier.

17. Procédé selon la revendication 16, caractérisé en ce que le réflecteur (32) est monté sur un satellite (24) et est un réflecteur principal.

18. Procédé selon la revendication 16 ou 17, caractérisé en ce que la transformation spatiale est une transformation de Fourier.

19. Procédé selon l'une quelconque des revendications 16 à 18, caractérisé en ce que l'étape (16.1) comprend les sous-étapes suivantes :

(19.1) on produit un signal en bande de base; et

(19.2) on introduit un ensemble de retards dans les signaux en bande de base, pour générer au moins un groupe des premiers signaux.

20. Procédé selon l'une quelconque des revendications 16 à 18, caractérisé en ce que l'étape (16.1) comprend les sous-étapes suivantes :

(20.1) on produit un signal en bande de base; et

(20.2) on applique le signal en bande de base à un ensemble de déphaseurs dépendant de la fréquence pour générer au moins un ensemble des premiers signaux.

21. Procédé selon l'une quelconque des revendications 16 à 20, caractérisé par l'étape suivante :

(21.1) on transpose en fréquence l'ensemble de premiers signaux, en parallèle, vers une première gamme de fréquence supérieure, avant de générer l'ensemble de seconds signaux.

22. Procédé selon l'une quelconque des revendications 16 à 21, caractérisé par les étapes supplémentaires suivantes :

(22.1) on produit un ensemble de troisièmes signaux ayant entre eux la relation de phase prédéterminée suivante :

$$X_n(t) = \sin(\omega t + n\psi) \qquad n = 0, 1, 2, 3$$

dans laquelle n désigne la position relative de chaque troisième signal dans l'ensemble de troisièmes signaux, et $\psi$ est la valeur de phase d'entrée,

(22.2) on fournit une matrice de Butler (82; 110) pour générer un ensemble de quatrièmes signaux à partir de l'ensemble de troisièmes signaux, en effectuant fondamentalement une transformation spatiale sur la distribution d'amplitude et de phase de l'ensemble de troisièmes signaux;

(22.3) on émet l'ensemble de quatrièmes signaux vers le réflecteur (32), en faisant passer les quatrièmes signaux à travers un ensemble d'éléments rayonnants (42; 142) identique à celui à travers lequel on fait passer les seconds signaux; et

(22.4) on transpose en fréquence l'ensemble de troisièmes signaux, en parallèle, vers une seconde gamme de fréquence supérieure, avant de générer l'ensemble de quatrièmes signaux, cette seconde gamme de fréquence étant différente de la première gamme de fréquence.

23. Procédé selon la revendication 22, caractérisé en ce que la matrice de Butler (82; 110) dans le système d'antenne (80; 138) est commune respectivement aux premiers et troisièmes signaux, pour générer simultanément les ensembles de seconds et quatrièmes signaux respectivement à partir des ensembles de premiers et troisièmes signaux.

FIG. 3

FIG. 2

FIG. 1

FIG. 4

FIG. 5

## FIG. 6

## FIG. 7

## FIG. 8

# FIG. 9

# FIG. 10

FIG. 11

## FIG. 12

## FIG. 13

FIG. 14